(19)

Europäisches Patentamt

European Patent Office

Office européen des brevets

(11) **EP 4 166 782 A1**

(12) **EUROPEAN PATENT APPLICATION**

(43) Date of publication:
**19.04.2023 Bulletin 2023/16**

(21) Application number: **21202626.4**

(22) Date of filing: **14.10.2021**

(51) International Patent Classification (IPC):
*F03D 7/04* (2006.01)

(52) Cooperative Patent Classification (CPC):
**F03D 7/045;** F05B 2260/821; F05B 2260/84;
F05B 2270/327; F05B 2270/331; F05B 2270/335;
F05B 2270/803

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VESTAS WIND SYSTEMS A/S**
**8200 Aarhus N (DK)**

(72) Inventors:
• **Caponetti, Fabio**
**8230 Abyhøj (DK)**
• **Hovgaard, Tobias Gybel**
**8680 Ry (DK)**

(74) Representative: **Vestas Patents Department**
**Hedeager 42**
**8200 Aarhus N (DK)**

(54) **WIND TURBINE MODEL PREDICTIVE CONTROL (MPC) WITH THRUST AND/OR POWER CORRECTION**

(57) The present invention relates to control of wind turbines where the control systems is based on model predictive control (MPC). The MPC routine includes a wind turbine model describing operational parameters of the wind turbine, including at least one of an aerodynamic thrust of the rotor and an aerodynamic power of the rotor. The aerodynamic thrust and/or the aerodynamic power is determined by the wind turbine model and a correction term, the correction term being determined based on a difference between the aerodynamic thrust and/or the aerodynamic power as determined from sensor input(s) and predicted aerodynamic thrust and/or predicted aerodynamic power obtained by the MPC routine.

Fig. 1

**Description**

FIELD OF THE INVENTION

The present invention relates to control of wind turbines, and in particular to wind turbines with control systems being based on model predictive control (MPC) where the MPC routine includes a wind turbine model describing operational parameters of the wind turbine, including at least one of an aerodynamic thrust of the rotor and an aerodynamic power of the rotor.

BACKGROUND OF THE INVENTION

Wind turbines are commonly used to supply electricity into the electrical grid. In general, a wind turbine or a wind turbine park is operated with the aim to obtain maximum yield of the capital invested in it, and consequently the wind turbine control systems are configured to maximize the output power, i.e. to operate the wind turbine to capture the maximal power that is available in the wind, with due regard to keeping the wind turbine within operational limits.

Different types of wind turbines exist, modern wind turbines are often of the variable speed type. For such a wind turbine the generator torque and the pitch angle of the blades are controlled to keep such parameters as aerodynamic torque, rotor speed and electrical power within an operational envelope depending on design parameters and operational conditions.

Modern turbines are operated by a number of computerized controllers which based on input signals determines actuator output signals. Many turbine controllers are implemented as feedback controllers of the PID-type. PID-type controllers are well-known and reliable controllers. Wind turbines are quite complex machines operating in complex, varying and often unpredictable environment. There may therefore be an advantage in applying more advanced control techniques of the multiple input, multiple output (MIMO) type. One example of such advanced controller is a controller based on the so-called Model Predictive Control (MPC) methodology.

WO2011/076295 discloses a wind turbine having a control method and controller for performing predictive control, hereunder MPC, of a wind turbine generator based on wind speed obtained at a predetermined distance in front of the rotor.

Wind turbine control based on MPC is challenged by the rather involved computations for executing an MPC algorithm or routine for real-time control. The MPC routine includes a wind turbine model describing operational parameters of the wind turbine. A number of operational parameters are included in such turbine model, hereunder wind speed and dynamic state of the wind turbine. Among the operational parameters, an aerodynamic thrust of the rotor and an aerodynamic power of the rotor are normally used.

It is against this background that the invention has been devised.

SUMMARY OF THE INVENTION

It would be advantageous to achieve control of a wind turbine using advanced model-based real-time control of at least selected control features. In particular it would be advantageous to achieve model predictive control (MPC) of wind turbines which are robust to gusts and other aspects involving parametric variations of the operational parameters used in the wind turbine model relied upon by the MPC routine.

Accordingly, in a first aspect, there is provided a wind turbine control system comprising:

a controller implementing a model predictive control (MPC) routine for calculating one or more predicted operational trajectories, the one or more predicted operational trajectories include a predicted control trajectory, where a trajectory comprises a time series of at least one variable;
wherein the MPC routine includes a wind turbine model describing operational parameters of the wind turbine, including at least one of an aerodynamic thrust of the rotor and an aerodynamic power of the rotor;
wherein the aerodynamic thrust and/or the aerodynamic power is determined by the wind turbine model and a correction term, the correction term being determined based on a difference between the aerodynamic thrust and/or the aerodynamic power as determined from sensor input(s) and predicted aerodynamic thrust and/or predicted aerodynamic power obtained by the MPC routine.

The MPC routine finds control parameters which provides optimized control over the prediction horizon. A wind turbine operates in a changing environment, e.g. gusts, wind directions changes, and differences between the predicted environment and the real environment may occur. In a changing environmental situation where such differences between the predicted environment and the real environment occur, an error between parameters of the prediction horizon and the real conditions may initially build up, but the MPC model will correct for this to bring the predicted parameters closer to the real parameters. In a situation, e.g. a gust, where the time scale of the changing parameters is shorter than the reaction time of the MPC, the reaction of the MPC may be too slow. To handle this issue a correction term is added to the wind turbine model. Specifically, the aerodynamic thrust and/or the aerodynamic power, as used by the wind turbine model, is determined by the wind turbine model and a correction term, where the correction term being determined based on a difference between the aerodynamic thrust and/or the aerodynamic power as determined from sensor input(s) and predicted aerodynamic thrust and/or predicted aerodynamic power obtained by the MPC routine. In this manner a faster response to changing parameters is obtained by directly correcting the underlying model. This is different from e. g. correcting an actuator signal by adding a correcting term to the actuator signal. The model may be an aero-elastic wind turbine model, e.g. based on blade element momentum theory (BEM). The model may also be a trained model.

In an embodiment, the predicted aerodynamic thrust and/or the predicted aerodynamic power is determined based on a prediction horizon of the aerodynamic thrust and/or the aerodynamic power. The prediction horizon is central for a model predictive control algorithm, and use of predicted values otherwise provided by the algorithm to determine the correction term is computational efficient.

In an embodiment, the sensor input(s) are obtained at a first sampling rate, and the MPC routine is calculating the one or more predicted operational trajectories at a second lower sampling rate. The predicted aerodynamic thrust and/or the predicted aerodynamic power is determined from the prediction horizon so that the predicted aerodynamic thrust and/or the predicted aerodynamic power substantially match the sampling time of the sensor input(s). Sensor inputs may be obtained at a higher sampling rate than operation of the MPC routine, as the computations needed for the MPC may be high. To ensure a timing match between measured values and predicted values, values of the prediction horizon may be used to match the sampling rate of the sensor input, and thereby increasing the accuracy.

In an embodiment, the correction term comprises an integral term taking into account an integrated difference between the aerodynamic thrust and/or the aerodynamic power as determined from sensor input(s) and predicted aerodynamic thrust and/or predicted aerodynamic power obtained by the MPC routine. By taking into account an integrated difference, errors which are building up are effectively handled.

In an embodiment, the MPC routine includes a wind turbine model describing operational parameters of the wind turbine, where the operational parameters of the wind turbine include the aerodynamic thrust of the rotor. In this embodiment, the operational parameters of the wind turbine is the aerodynamic thrust of the rotor. In such embodiment the sensor input(s) may be based on blade root load sensors. As alternatives or in addition to blade root load sensors, also blade accelerometers, vision-based bladed deflection sensors, GPS-based blade deflection sensors, etc. may be used.

The correction term for the wind turbine model may be implemented in different ways. In one embodiment, the correction term of the aerodynamic thrust of the rotor comprises one element being a bandpass filtered signal of the aerodynamic thrust as determined from sensor input(s) and one element being an integrated difference between the aerodynamic thrust as determined from sensor input(s) and predicted aerodynamic thrust obtained by the MPC routine. In another embodiment, as an alternative or in addition, a blade model converting determined rotor thrust to an estimated blade root load may be used, and wherein the correction term comprises an integral term taking into account an integrated difference between the blade root load as determined from sensor input(s) and the estimated blade root load obtained from the blade model.

In an embodiment, the MPC routine includes a wind turbine model describing operational parameters of the wind turbine, where the operational parameters of the wind turbine include the aerodynamic power of the rotor. In this embodiment, the operational parameters of the wind turbine is the aerodynamic power of the rotor. In such embodiment the sensor input(s) are based on rotor speed sensor(s). As alternatives or in addition to rotor speed sensor(s), the aerodynamic power determination may be determined based on pitch and/or rotor torque.

The correction term for the wind turbine model may be implemented in different ways. In one embodiment, the correction term of the aerodynamic power of the rotor comprises one element being a bandpass filtered signal of the aerodynamic power as determined from sensor input(s) and one element being an integrated difference between the aerodynamic power as determined from sensor input(s) and predicted aerodynamic power obtained by the MPC routine.

In a further aspect, the invention relates to a method of controlling a wind turbine comprising the control system according the first aspect. In yet further aspects, the invention relates to a computer program product. The computer program product may be provided on a computer readable storage medium or being downloadable from a communication network. The computer program product comprises instructions to cause a data processing system, e.g. in the form of a controller, to carry out the instruction when loaded onto a data processing system.

In general, the control system may be implemented on a unit or collection of functional units which comprises one or more processors, input/output interface(s) and a memory capable of storing instructions can be executed by a processor.

In general, the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Figure 1 schematically illustrates an embodiment of a wind turbine control system together with elements of a wind turbine;

Figure 2 illustrates elements of an embodiment of the MPC controller in relation to signals involved in determining the pitch actuator control signal;

Figures 3 and 4 illustrate example flow diagrams where the correction term for the aerodynamic thrust is obtained based on blade root load sensors; and

Figure 5 illustrates an example flow diagram where the correction term for the aerodynamic power is obtained based on a generator speed sensor.

DESCRIPTION OF EMBODIMENTS

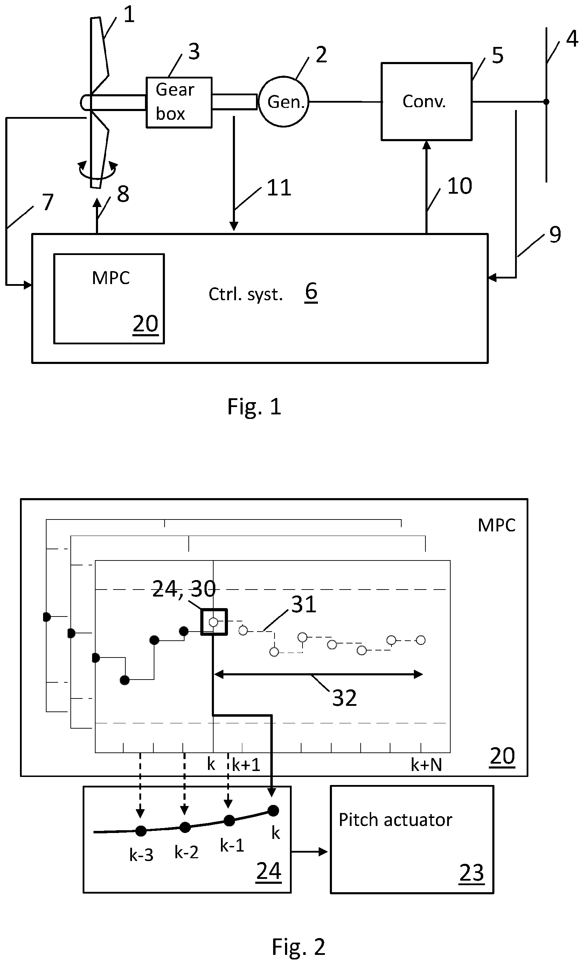

Figure 1 schematically illustrates an embodiment of a wind turbine control system 6 together with elements of a wind turbine. The wind turbine comprises rotor blades 1 which are mechanically connected to an electrical generator 2 via gearbox 3. In direct drive systems, and other systems, the gear box may not be present. The electrical power generated by the generator 2 is injected into a power grid 4 via an electrical converter 5. The electrical generator 2 and the converter 5 may be based on a full-scale converter architecture or a doubly fed induction generator (DFIG) architecture, but other types may be used.

The control system 6 comprises a number of elements, including processor and a memory, so that sub-units of the control system is capable of executing computing tasks based on instructions stored in the memory. In general, the wind turbine controller 6 ensures that in operation the wind turbine generates a requested power output level within design limits. This is obtained by adjusting the pitch angle and/or the power extraction of the converter. To this end, the control system 6 instructs a pitch system using a pitch reference 8, and a power system using a power reference 10. The control system receives a number of input signals, hereunder the pitch positions 7 of each rotor blade, the grid power 9, the rotor speed 11. Moreover, a number of other sensor values are made available to the elements of the control system. In the figure two rotor blades are shown, however any number of rotor blades may be used, in particular three rotor blades.

The wind turbine control system 6 comprises a controller unit 20 implemented as an MPC controller unit to calculate a predicted control value for use in the control of the wind turbine. The MPC controller unit may be implemented as the central controller in the control system 6, or it may be implemented as a control module for handling specific control task, whereas other control modules are handling other control tasks.

Figure 2 illustrates elements of an embodiment of the MPC controller in relation to signals involved in determining the pitch actuator control signal.

Figure 2 illustrates elements of an MPC controller 20 which repeatedly calculates a predicted operational trajectory 31 also sometimes referred to as a prediction horizon. An MPC routine is a receding horizon control routine which optimizes the current timeslot, k, while taking future timeslots into account, here shown as the prediction horizon 32 comprising k+N steps. This is achieved by optimizing a finite time-horizon, using the current timeslot 30 as the control value 24 and then optimize again, repeatedly. The operational trajectory comprises a time series of at least one variable, here the collective pitch setpoint, and includes a predicted control value 24, 30, taken as the current predicted control value. This is illustrated in Fig. 2 where for each current optimization and resulting predicted trajectory, the current predicted value 30 is taken as the actuator setpoint 24 for the collective pitch, shown as actuator setpoint for timeslots k-3 to k.

Figure 2 shows a single MPC calculated control variable, but the control system will generally operate with a number of operational trajectories of both operational variables and control values. The operational trajectories and control trajectories may include, but are not limited to, one or more of the following parameters: pitch value, including collective pitch values and individual pitch values, rotor speed, rotor acceleration, tower movement, power related parameters, torque related parameters and derivatives of these parameters, as well as to such parameters as generated power $P_g$, power extracted from the wind $P_w$, available power in the wind $P_{av}$, and the kinetic energy in the rotating system K.

In an embodiment, the operational trajectory is a predicted operational state trajectory. A state is a collection, often expressed as a vector, of operational parameters. An example wind turbine state is:

$$x^* = \begin{bmatrix} \theta(t) \\ \dot{\theta}(t) \\ \omega(t) \\ \dot{\omega}(t) \\ s(t) \\ \dot{s}(t) \\ \ddot{s}(t) \end{bmatrix}$$

comprising pitch value, $\theta$, rotor angular speed, $\omega$, and tower top position, s, as well as time derivatives of those parameters. Other and more parameters may be used to define the wind turbine state, $x^*$.

The state values of the current operational state of the wind turbine may be based on measured sensor readings from sensors arranged to measure sensor data relating to the wind turbine's physical state values. Additionally, estimated values or calculated values may also be used. In an embodiment, the state may be determined by a state calculator, e. g. in the form of a dedicated computational unit in charge of determining the current operational state, such as an observer or a Kalman filter.

The trajectory may be expressed as a control trajectory. An example control trajectory may be:

$$u_1{}^* = \begin{bmatrix} \theta_{ref} \\ P_{ref} \end{bmatrix}$$

comprising the collective pitch reference signal and the power reference signal. Other and more parameters may be used to define the wind turbine control signal, $u_1{}^*$.

Figure 2 shows a trajectory 31 of a control value for a number of discrete time steps. The figure shows the current time, k, as well as a number of past time steps and a number of future time steps 32. Known values are marked with a solid circle, whereas predicted values are marked with an open circle. A trajectory may comprise a time series of predicted values, i.e. only the open circles. The trajectory need not include the past and known values, but may do in certain embodiments. The trajectory may span a time series of a few seconds, such as 5-10 seconds. However, the trajectory may be longer or shorter depending on the given implementation.

Model Predictive Control (MPC) is a multivariable control algorithm that uses an optimization cost function J over the receding prediction horizon, to calculate the optimal control moves.

The optimization cost function may be given by:

$$J = \sum_{i=1}^{N} w_{y_i} (r_i - y_i)^2 + w_{u_i} \Delta u_i{}^2$$

where $r_i$ is the set-point for the i-th variable, $y_i$ and $u_i$ being i-th trajectory variables, and $w_{y_i}$ being weight matrix defining the relative importance of this variable, and $w_{u_i}$ being weight matrix defining the penalty related to changes in this variable.

In another embodiment, the MPC may be implemented as a so-called economic optimizing MPC or just economic MPC. In economic MPC the optimization is based on a maximization of the cost function on the form:

$$\text{maximize (Power} - \lambda_1 \text{ Fatique} - \lambda_2 \text{ Extreme load} - \lambda_3 \text{ Pitch rate} - \ldots ),$$

where $\lambda_1$ - $\lambda_3$ are tuneables. Such cost function is often called an objective function.

The optimization problem may in an embodiment be solved by a change of variables, to a formulation where the pitch and torque are treated as variables derived from the powers, e.g. in a parameter space where generator power, power extracted from the wind and kinetic energy is optimized. This is e.g. disclosed by T. Hovgaard, S. Boyd, and J. Jorgensen, in Model Predictive Control for Wind Power Gradients. Wind Energy, 18(6):991-1006, 2015. In such an embodiment, the MPC calculation may comprise three layers: a pre-processing layer, a solving layer and a post-processing layer. In the pre-processing such steps as transformation of the measured values of pitch and generator speed into corresponding powers. Also constraints are determined, the turbine state is estimated, etc. A result of the pre-processing is that the objective function is defined in a form which can be input into a solver. In the solving layer, a maximum of the objectivity function is found. The solver being a computing unit arranged to find an optimum, preferably a global optimum of the objective function. This optimum, will be an optimum expressed in power variables. In a post processing, the optimizing values are back-transformed into the control values in the form of pitch and generator speed. These optimized values are then used in the control.

To predict the wind turbine operation in the prediction horizon, the MPC routine 20 includes a wind turbine model 40 describing operational parameters of the wind turbine. The wind turbine model includes a model of at least one of an aerodynamic thrust of the rotor and an aerodynamic power of the rotor.

The model of the aerodynamic thrust (Eq. 1) and aerodynamic power (Eq. 2) may be based on the standard formulas:

$$F_{TH} = \frac{1}{2} \cdot \rho \cdot A \cdot C_t(\lambda, \theta) \cdot V^2 \quad \text{(Eq. 1)}$$

$$P = \frac{1}{2} \cdot \rho \cdot A \cdot C_p(\lambda, \theta) \cdot V^3 \quad \text{(Eq. 2)}$$

Where $\rho$ is the measured or estimated air density, $A$ is the rotor area, $C_t$ the thrust coefficient, $C_p$ is the power coefficient and V the measured or estimated wind speed, $\lambda$ being the tip-speed ratio, and $\theta$ the pitch angle.

In embodiments, the correction term is added to the model calculations, so that the resulting thrust force ($F_{R,TH}$) and/or power ($P_R$) used in the wind turbine model 40 is determined as

$$F_{R,TH} = F_{TH} + \Delta F$$

$$P_R = P + \Delta P$$

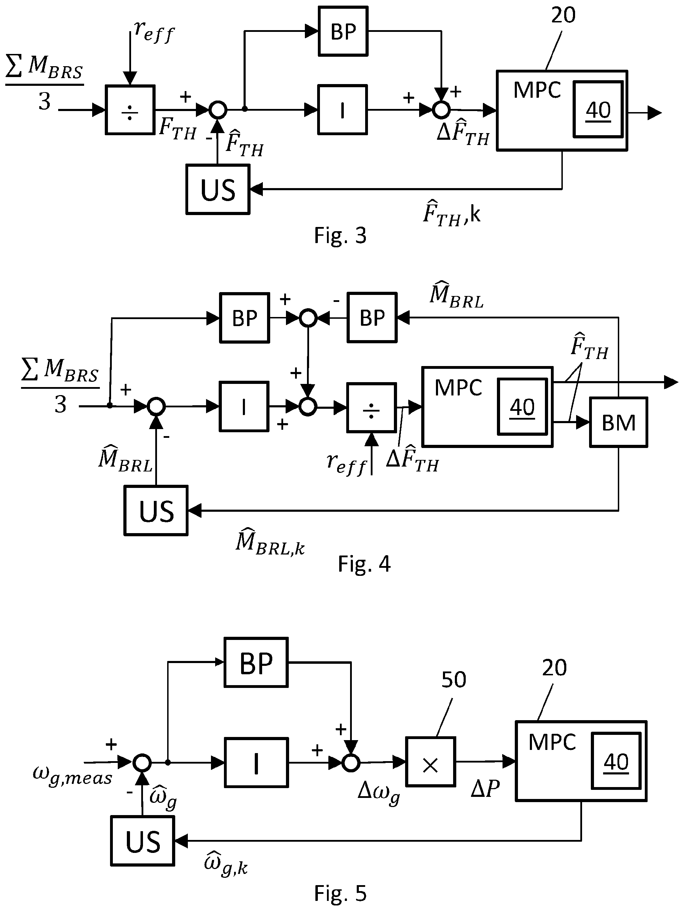

Figures 3 and 4 illustrate example flow diagrams where the correction term for the aerodynamic thrust is obtained based on blade root load sensors.

In Figure 3 the MPC routine 20 includes a wind turbine model 40 where the operational parameters of the wind turbine include the aerodynamic thrust of the rotor, e.g. based on the expression of Eq. 1. The correction term is being determined based on the difference between the predicted thrust force, $\hat{F}_{TH}$, as determined by the MPC routine and the thrust force as determined from sensor input(s) in the form of blade root load sensors, e.g. as the sum of the three blade root load sensor values divided by three, i.e. the mean blade root load value. The mean blade root load value is divided by the effective radius of the blades to provide a measured value for the thrust force, $F_{TH}$.

The correction term, $\Delta \hat{F}_{TH}$, comprises an integral term, I, taking into account the integrated difference between the aerodynamic thrust as determined from the blade root load sensors and the predicted aerodynamic thrust. Additionally, the correction term comprises an element being a bandpass filtered signal of the aerodynamic thrust BP. The bandpass filter being a low pass filter for removing high frequency noise in the blade root load signal. By combining the bandpass filtered difference and the integrated difference, a difference signal can be built which takes into account the fast (or high sample rate) blade root load sensor signal and the slow (or low sample rate) MPC prediction signal.

Sensor inputs may be obtained at a higher sampling rate than operation of the MPC routine. The output of the MPC routine is a prediction horizon. In an embodiment, the values of the prediction horizon are provided to an up-sampling unit US which, based on values of the prediction horizon, outputs a predicted value which match the sampling rate of the sensor input. The predicted value used in the comparison with the sensor values may e.g. the value of the prediction horizon which match the timing of the sensor value, but the comparison value may also be based on a functional expression which based on more values of the prediction horizon determines the comparison value.

Figure 4 illustrates another example of a flow diagram where the correction term for the aerodynamic thrust is obtained based on blade root load sensors. In the embodiment of Fig. 4, a blade model BM is implemented for converting the determined rotor thrust to an estimated blade root load, $\hat{M}_{BRL}$. As in the implementation of Fig. 3, the correction term to the thrust comprises an integral term, and a bandpass filtered signal element. By use of a blade model a more direct comparison with the measured blade root load can be made. Also in this case may an up-sampling unit US be used.

In Figure 5 the MPC routine 20 includes a wind turbine model 40 where the operational parameters of the wind turbine include the aerodynamic power of the rotor, e.g. based on the expression of Eq. 2. The correction term is being determined based on the difference between the predicted power, as determined by the MPC routine and the measured power as determined from sensor input(s) in the form of rotor speed sensors.

As in connection with the rotor thrust, the correction term, $\Delta P$, of the aerodynamic power of the rotor comprises one element being a bandpass filtered signal of the aerodynamic power as determined from the rotor speed sensor and one element being an integrated difference between the aerodynamic power as determined from sensor input(s) and predicted aerodynamic power obtained by the MPC routine.

The correction term in the illustrated flow diagram is first provided as correction to the generator speed. In a situation where the MPC routine implements a model using power, the rotor speed term may be converted into a power term, $\Delta P$. This may e.g. be done by multiplying the squared rotor speed with the rotor inertia moment to obtain the kinetic energy correction needed. By multiplying the kinetic energy with the sampling time, the correction term in power is obtained.

Also in this case may an up-sampling unit US be used.

Example embodiments of the invention have been described for the purposes of illustration only, and not to limit the scope of the invention as defined in the accompanying claims.

## Claims

1. A wind turbine control system comprising:

   a controller implementing a model predictive control (MPC) routine for calculating one or more predicted operational trajectories, the one or more predicted operational trajectories include a predicted control trajectory, where a trajectory comprises a time series of at least one variable;
   wherein the MPC routine includes a wind turbine model describing operational parameters of the wind turbine, including at least one of an aerodynamic thrust of the rotor and an aerodynamic power of the rotor;
   wherein the aerodynamic thrust and/or the aerodynamic power is determined by the wind turbine model and a correction term, the correction term being determined based on a difference between the aerodynamic thrust and/or the aerodynamic power as determined from sensor input(s) and predicted aerodynamic thrust and/or predicted aerodynamic power obtained by the MPC routine.

2. The control system according to claim 1, wherein the predicted aerodynamic thrust and/or the predicted aerodynamic power is determined based on a prediction horizon of the aerodynamic thrust and/or the aerodynamic power.

3. The control system according to claim 2, wherein the sensor input(s) are obtained at a first sampling rate, and wherein the MPC routine is calculating the one or more predicted operational trajectories at a second lower sampling rate, and wherein the predicted aerodynamic thrust and/or the predicted aerodynamic power is determined from the prediction horizon so that the predicted aerodynamic thrust and/or the predicted aerodynamic power substantially match the sampling time of the sensor input(s).

4. The control system according to any preceding claims, wherein the correction term comprises an integral term taking into account an integrated difference between the aerodynamic thrust and/or the aerodynamic power as determined from sensor input(s) and predicted aerodynamic thrust and/or predicted aerodynamic power obtained by the MPC routine.

5. The control system according to any preceding claims, wherein the operational parameters of the wind turbine is the aerodynamic thrust of the rotor, and wherein the sensor input(s) are based on blade root load sensors.

6. The control system according to claim 5, wherein the correction term of the aerodynamic thrust of the rotor comprises one element being a bandpass filtered signal of the aerodynamic thrust as determined from sensor input(s) and one element being an integrated difference between the aerodynamic thrust as determined from sensor input(s) and predicted aerodynamic thrust obtained by the MPC routine.

7. The control system according to claim 5 or 6, further comprising a blade model converting determined rotor thrust to an estimated blade root load, and wherein the correction term comprises an integral term taking into account an integrated difference between the blade root load as determined from sensor input(s) and the estimated blade root load obtained from the blade model.

8. The control system according to any preceding claims, wherein the operational parameters of the wind turbine is the aerodynamic power of the rotor, and wherein the sensor input(s) are based on rotor speed sensor(s).

9. The control system according to claim 8, wherein the correction term of the aerodynamic power of the rotor comprises one element being a bandpass filtered signal of the aerodynamic power as determined from sensor input(s) and one element being an integrated difference between the aerodynamic power as determined from sensor input(s) and predicted aerodynamic power obtained by the MPC routine.

10. A method of controlling a wind turbine, the method comprising:

calculating one or more predicted operational trajectories using a model predictive control (MPC) routine, the one or more predicted operational trajectories include a predicted control trajectory, where a trajectory comprises a time series of at least one variable;
wherein the MPC routine includes a wind turbine model describing operational parameters of the wind turbine, including at least one of an aerodynamic thrust of the rotor and an aerodynamic power of the rotor;
in the wind turbine model, add a correction term to the aerodynamic thrust and/or the aerodynamic power;
wherein the correction term being determined based on a difference between the aerodynamic thrust and/or the aerodynamic power as determined from sensor input(s) and predicted aerodynamic thrust and/or predicted aerodynamic power obtained by the MPC routine.

11. A computer program product comprising software code adapted to control a wind turbine when executed on a data processing system, the computer program product being adapted to perform the method of claim 10.

Fig. 1

Fig. 2

Fig. 3

Fig. 4

Fig. 5

Europäisches
Patentamt

European
Patent Office

Office européen
des brevets

# EUROPEAN SEARCH REPORT

Application Number

EP 21 20 2626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/053745 A1 (BLOM ROGIER SEBASTIAAN [US] ET AL) 25 February 2016 (2016-02-25) * paragraphs [0001], [0078] – [0080], [0087], [0088], [0102] * | 1,2,5, 10,11 | INV. F03D7/04 |
| Y | CN 112 502 900 A (UNIV ZHEJIANG TECHNOLOGY) 16 March 2021 (2021-03-16) * paragraphs [0008], [0011], [0012] * | 1,2,5, 10,11 | |
| A | EP 2 746 576 A2 (GEN ELECTRIC [US]) 25 June 2014 (2014-06-25) * paragraphs [0001], [0034], [0055], [0077] * | 1,2,10, 11 | |
| A | EP 3 359 811 A1 (VESTAS WIND SYS AS [DK]) 15 August 2018 (2018-08-15) * paragraphs [0008], [0009], [0036], [0053], [0068] * | 1,2,4, 10,11 | |
| A | ARNE KOERBER ET AL: "Combined Feedback Feedforward Control of Wind Turbines Using State-Constrained Model Predictive Control", IEEE TRANSACTIONS ON CONTROL SYSTEMS TECHNOLOGY, IEEE SERVICE CENTER, NEW YORK, NY, US, vol. 21, no. 4, 1 July 2013 (2013-07-01), pages 1117-1128, XP011515138, ISSN: 1063-6536, DOI: 10.1109/TCST.2013.2260749 | 1,2,10, 11 | TECHNICAL FIELDS SEARCHED (IPC) F03D |

The present search report has been drawn up for all claims

| Place of search | Date of completion of the search | Examiner |
|---|---|---|
| The Hague | 11 March 2022 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 2626

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2022

| Patent document cited in search report | | Publication date | Patent family member(s) | | Publication date |
|---|---|---|---|---|---|
| US 2016053745 | A1 | 25-02-2016 | US 2016053745 A1 | | 25-02-2016 |
| | | | WO 2016032815 A1 | | 03-03-2016 |
| CN 112502900 | A | 16-03-2021 | NONE | | |
| EP 2746576 | A2 | 25-06-2014 | DK 2746576 T3 | | 08-02-2021 |
| | | | EP 2746576 A2 | | 25-06-2014 |
| | | | ES 2848211 T3 | | 05-08-2021 |
| | | | US 2014178195 A1 | | 26-06-2014 |
| EP 3359811 | A1 | 15-08-2018 | CN 108350862 A | | 31-07-2018 |
| | | | EP 3359811 A1 | | 15-08-2018 |
| | | | ES 2819124 T3 | | 15-04-2021 |
| | | | US 2018266392 A1 | | 20-09-2018 |
| | | | WO 2017059862 A1 | | 13-04-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011076295 A

**Non-patent literature cited in the description**

- **T. HOVGAARD ; S. BOYD ; J. JORGENSEN.** Model Predictive Control for Wind Power Gradients. *Wind Energy,* 2015, vol. 18 (6), 991-1006